(19) Europäisches Patentamt

European Patent Office

Office européen des brevets

(11) Numéro de publication : **0 345 165 B1**

# (12) FASCICULE DE BREVET EUROPEEN

(45) Date de publication du fascicule du brevet :
**05.02.92 Bulletin 92/06**

(51) Int. Cl.⁵ : **F25D 29/00, F25D 11/02**

(21) Numéro de dépôt : **89401519.7**

(22) Date de dépôt : **02.06.89**

(54) **Réfrigérateur-congélateur.**

(30) Priorité : **03.06.88 FR 8807402**

(43) Date de publication de la demande :
**06.12.89 Bulletin 89/49**

(45) Mention de la délivrance du brevet :
**05.02.92 Bulletin 92/06**

(84) Etats contractants désignés :
**DE ES GB IT NL SE**

(56) Documents cités :
**EP-A- 0 189 207**
**FR-A- 1 068 697**
**FR-A- 1 083 845**

(56) Documents cités :
**FR-A- 2 254 762**
**FR-A- 2 554 567**
**FR-A- 2 554 568**
**US-A- 2 488 161**

(73) Titulaire : **SOCIETE D'ELECTROMENAGER DU NORD SELNOR**
**Avenue des Sports**
**F-59810 Lesquin (FR)**

(72) Inventeur : **Awtuch, Bernard**
**THOMSON-CSF SCPI CEDEX 67**
**F-92045 Paris la défense (FR)**

(74) Mandataire : **Phan, Chi Quy et al**
**THOMSON-CSF SCPI**
**F-92045 PARIS LA DEFENSE CEDEX 67 (FR)**

EP 0 345 165 B1

## Description

La présente invention concerne les réfrigérateurs-congélateurs qui assurent, d'une part, la conservation au frais dans un premier de leurs compartiments et, d'autre part, la congélation et la conservation à basse température dans un deuxième de leurs compartiments.

Les appareils réfrigérateurs-congélateurs comprennent habituellement un compartiment maintenu à une température située entre 0° et + 5°C environ pour le stockage des denrées fraîches, et un compartiment engendrant une basse température égale ou inférieure à environ – 18°C pour la congélation des produits et la conservation des produits congelés. Leur organe de production de froid comporte souvent deux évaporateurs généralement montés en série, un pour le compartiment à basse température et le deuxième pour le compartiment des denrées fraîches. La répartition des agents frigorigènes dans les deux évaporateurs est par structure à peu près constante ; par contre, la demande de froid respective à ces évaporateurs est variable en fonction de la température ambiante et des conditions d'emploi auxquelles sont soumis les deux compartiments de ces appareils. La régulation en température des deux compartiments est réalisée par un thermostat dont la sonde se trouve dans le réfrigérateur, permettant ainsi d'assurer le dégivrage de l'évaporateur dudit réfrigérateur.

L'inconvénient majeur de ce système est qu'il ne prend pas en compte les besoins frigorifiques réels du compartiment à basse température et qu'il peut en découler des conséquences fâcheuses. Ainsi, lorsque la température ambiante est peu élevée, la demande en froid du compartiment de conservation des denrées fraîches est peu importante. Comme c'est elle qui détermine la cadence de fonctionnement du moto-compresseur de l'organe de production de froid, il peut arriver que la production de froid devienne insuffisante pour assurer la conservation des produits congelés ou, à plus forte raison, la congélation de produits dans le compartiment à basse température.

Une façon connue de remédier à cet inconvénient est de prévoir une résistance chauffante dans le compartiment de conservation au frais. Ladite résistance chauffante est habituellement montée contre l'évaporateur du compartiment de conservation au frais et mise automatiquement en marche à chaque arrêt du moto-compresseur de l'organe de production de froid. Ainsi, quelle que soit la température ambiante, la demande de froid du compartiment de conservation au frais, et par conséquent la cadence de fonctionnement du moto-compresseur, sont maintenues au-dessus d'un minimum pour lequel une production de froid suffisante dans le compartiment à basse température est assurée.

Dans certains systèmes existants, une deuxième résistance chauffante peut également être prévue, mise sous tension seulement lors d'une congélation à basse température. Elle travaille en continu et est généralement montée dans une autre partie du compartiment de conservation au frais, à l'écart de l'évaporateur.

Dans un système décrit dans la Demande de Brevet FR-A-2254762 la production de froid dans le compartiment à basse température est modifiée selon qu'il agit en tant que conservateur de produits congelés ou en tant que congélateur de produits au moyen d'une seule résistance chauffante. La résistance chauffante, placée dans le compartiment de conservation au frais, est utilisée avec un dispositif de réglage de courant qui alimente cette résistance. Ce dispositif de réglage de courant permet à la résistance de travailler à une fraction de sa puissance pendant le fonctionnement du compartiment à basse température en conservateur de produits congelés, et à pleine puissance pendant le fonctionnement dudit compartiment à basse température en congélateur de produits.

Ces systèmes mentionnés ci-dessus présentent tous un même inconvénient, à savoir que l'utilisateur ne peut pas ajuster manuellement la production de froid dans son compartiment à basse température en fonction du niveau de remplissage en denrées ou de la masse de denrées à congeler sans perturber notablement la température de son compartiment réfrigérateur.

La présente invention a pour objet un appareil réfrigérateur-congélateur affranchi de l'inconvénient mentionné ci-dessus, à savoir que le dispositif permet de s'affranchir des besoins frigorifiques naturels du compartiment de conservation au frais afin d'optimiser la production de froid dans le compartiment à basse température en fonction de son besoin, sans perturber la température dans le compartiment de conservation au frais.

L'invention concerne un appareil réfrigérateur-congélateur muni d'un circuit frigorifique à deux évaporateurs alimentés par un moto-compresseur commandé par un thermostat et ayant deux compartiments dont l'un, à basse température, assure, au moyen du premier des évaporateurs, la congélation de produits et la conservation de produits congelés en général à une température égale ou inférieure à – 18°C environ tandis que l'autre compartiment assure, au moyen du deuxième desdits évaporateurs et d'un moyen de chauffage à résistance, la conservation de denrées fraîches à une température située entre 0°C et 5°C, environ, l'élément sensible tel que le bulbe dudit thermostat se trouvant dans le compartiment de conservation au frais.

Un réfrigérateur-congélateur selon l'invention est caractérisé en ce qu'il comporte un moyen de réglage de la puissance dissipée par ledit moyen de chauffage à résistance à des valeurs distinctes choisies en fonction du niveau de remplissage en produits congelés ou de la masse de produits à congeler dans le compartiment à basse température.

Dans une forme de réalisation, ledit moyen de chauffage à résistance est constitué par une résistance associée, par exemple en série, à un potentiomètre.

Selon une autre caractéristique de l'invention, on prévoit un moyen d'alimentation sélective du moyen de chauffage à résistance qui est constitué par le thermostat commandant le moto-compresseur.

Selon encore une autre caractéristique de l'invention, le moyen de réglage de la puissance dissipée par le moyen de chauffage à résistance est un dispositif de réglage progressif du courant, ce dispositif et le moyen de chauffage à résistance étant montés en série aux bornes du moyen d'alimentation sélective du moyen de chauffage à résistance. Avantageusement, le dispositif de réglage progressif du courant est un dispositif du type potentiomètre. Un dispositif à positions de réglage discrètes, du type rotacteur, peut aussi être utilisé.

Le système peut être encore amélioré en prévoyant un thermostat monté en série avec le moyen de réglage de la puissance dissipée par le moyen de chauffage à résistance, dont le bulbe (l'élément de détection) se trouve dans la zone de congélation du compartiment à basse température, et qui s'ouvre quand la température dans ladite zone descend audessous de – 18°C, environ.

Un autre thermostat peut aussi être monté en parallèle aux bornes du moyen de chauffage à résistance, dont le bulbe se trouve dans la zone de conservation du compartiment à basse température, et qui s'ouvre quand la température monte au-dessus de – 15°C, environ, ledit thermostat ne se fermant qu'à une température inférieure à – 18°C, environ.

Ces deux thermostats permettent de neutraliser la résistance chauffante lorsque la congélation est terminée pour le premier, et lorsque la température de conservation est correcte pour le second.

Les caractéristiques de l'invention mentionnées ci-dessus, ainsi que d'autres, apparaîtront plus clairement à la lecture de la description suivante d'un exemple de réalisation, faite en relation avec les dessins joints, parmi lesquels :

la fig. 1 représente schématiquement une partie du circuit électrique d'un réfrigérateur-congélateur, décrite dans la demande de brevet FR-A-2254762 déjà mentionnée,

la fig. 2 représente schématiquement une partie correspondante du circuit électrique d'un réfrigérateur-congélateur suivant l'invention, et

la fig. 3 représente schématiquement une partie du circuit électrique correspondante d'un autre réfrigérateur-congélateur suivant l'invention.

Les réfrigérateurs-congélateurs actuels comprennent généralement un compartiment pour denrées fraîches et un compartiment pour denrées congelées. De tels appareils assurent, d'une part, la conservation au frais des produits dans leur compartiment pour denrées fraîches et, d'autre part, la congélation des produits et la conservation des produits congelés dans leur compartiment pour denrées congelées.

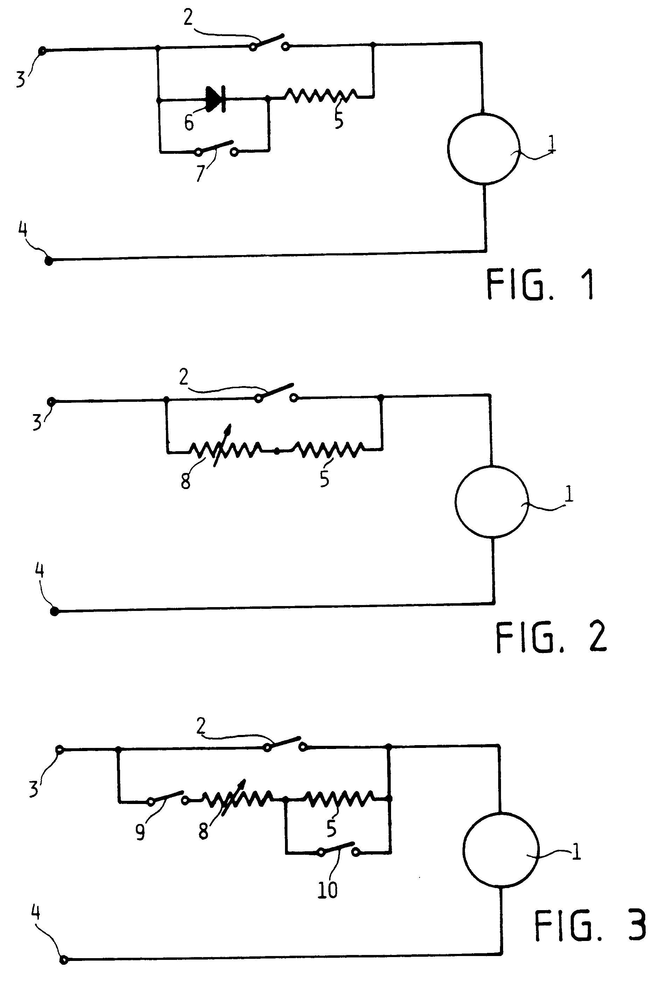

Ces appareils comprennent souvent dans leur circuit frigorifique deux évaporateurs, l'un monté dans le compartiment à basse température et l'autre dans le compartiment de conservation au frais. Le circuit frigorifique est alimenté en fluide frigorigène le plus souvent par un motocompresseur, représenté schématiquement par un cercle 1 aux Figs. 1, 2 et 3, dans lesquelles les mêmes éléments sont désignés par les mêmes références numériques.

Quand le moto-compresseur 1 est en marche, il comprime le fluide frigorigène gazeux et le refoule à travers un condenseur dans les deux évaporateurs de l'appareil. La répartition du fluide frigorigène liquide dans ces deux évaporateurs, qui est déterminée par la structure du circuit de l'appareil, reste sensiblement constante au cours du fonctionnement de ce circuit frigorifique. L'évaporation du fluide frigorigène liquide dans les deux évaporateurs donne respectivement du froid aux deux compartiments de l'appareil. La température dans le compartiment de conservation au frais est habituellement maintenue à une valeur située entre 0°C et 5°C. Un thermostat 2, dont le bulbe (l'élément de détection sensible à la température) est en contact avec l'évaporateur du compartiment de conservation au frais, est monté en série avec le moteur électrique du motocompresseur 1, entre les bornes 3 et 4 d'une source électrique. Le thermostat 2 coupe l'alimentation électrique du motocompresseur 1 dès que la température à l'intérieur du compartiment de conservation au frais descend au-dessous de 0°C, puis la rétablit quand la température dans le compartiment de conservation au frais dépasse 5°C.

Le compartiment à basse température de l'appareil doit pouvoir abaisser la température d'une certaine quantité de produits fixée par les normes à une valeur inférieure ou égale à – 18°C dans un intervalle de temps de 24 heures, et conserver cette quantité de produits congelés à une température inférieure ou égale à – 18°C. Ce résultat peut être atteint, soit quand l'évaporateur de ce compartiment a une dimension suffisamment importante, soit lorsque la cadence de fonctionnement du moto-compresseur du circuit frigorifique de l'appareil est augmentée, dans le cas d'un évaporateur de dimension limitée. En pratique, la grandeur de l'évaporateur est limitée dans sa détermination par la dimension du compartiment dans lequel il est monté. Dans le cas d'une augmentation de la cadence de fonctionnement du moto-compresseur du circuit frigorifique, la production de froid est aussi bien augmentée dans le compartiment à basse température que dans le compartiment de conservation au frais. Il y a ainsi un risque de provoquer une gelée dans le compartiment de conservation au frais.

Dans le système décrit dans la demande de brevet FR-A-2254762 et illustré à la Fig. 1, une résistance chauffante 5, placée dans le compartiment de conservation au frais, est montée aux bornes du thermostat 2, Fig. 1, de sorte qu'elle ne fonctionne qu'à l'arrêt du moto-compresseur, c'est-à-dire à l'ouverture du thermostat. Une diode 6, montée en série avec la résistance chauffante 5, et aux bornes de laquelle est monté en parallèle un interrupteur 7, permet de faire travailler la résistance chauffante 5 à pleine puissance lorsque l'interrupteur 7 est fermé, pour la congélation de produits, et à demi-puissance lorsque l'interrupteur 7 est ouvert, pour la conservation de produits congelés. L'inconvénient de ce dispositif, comme on l'a déjà mentionné, réside dans le fait qu'il n'y a pas de possibilité de réglage en fonction de la quantité de produits à congeler ou de la quantité de produits congelés à conserver.

Selon l'invention, avec la résistance chauffante 5, est utilisé un dispositif de réglage progressif du courant 8, Fig. 2, qui alimente ladite résistance. Le dispositif 8 est monté en série avec la résistance 5 aux bornes du thermostat 2. Le dispositif de réglage progressif du courant d'alimentation 8 permet à la résistance 5 de travailler à une fraction de sa puissance pendant l'arrêt du moto-compresseur pour augmenter sa cadence de fonctionnement en fonction des besoins réels en froid du compartiment à basse température, sans pour cela affecter la température du compartiment de conservation au frais. L'augmentation adéquate de la cadence de fonctionnement du compresseur est obtenue en positionnant une commande de réglage sur un moyen de repérage qui peut être gradué en unité de poids et/ou unités de volume de produits à congeler et en unités de poids et/ou de volume de produits congelés à conserver. Le moyen de repérage peut aussi comporter des indications du type "pleine charge", "demi-charge", "tiers de charge", etc.

Une partie du circuit électrique d'un réfrigérateur-congélateur selon une autre forme de réalisation de l'invention est montrée à la Fig. 3. Ici, aux bornes du thermostat 2, sont montés en série un thermostat 9, le dispositif de réglage progressif de courant 8 et la résistance 5. D'autre part, un thermostat 10 est monté en parallèle aux bornes de la résistance 5.

L'élément de détection du thermostat 9 est placé dans la zone de congélation de l'appareil, celle-ci se trouvant en général à proximité de l'évaporateur dans le compartiment à basse température. Il est fermé tant que la température est supérieure à – 18°C. Il s'ouvre quand la température passe au-dessous de – 18°C, permettant donc de neutraliser la résistance 5 quand la congélation est terminée. Au thermostat 9, peut être associé un voyant, non montré, qui s'allume lorsque le thermostat s'ouvre, indiquant que la congélation est terminée et que le réglage de la production de froid dans le compartiment à basse température doit être modifié. On remarquera que le thermostat 9 s'ouvrira également si le réglage en conservation de produits congelés est trop fort. Dans ce cas, encore, le voyant avertira que le réglage de production de froid dans le compartiment à basse température doit être corrigé.

L'élément de détection du thermostat 10 se trouve dans la zone de conservation de l'appareil qui, en général, est éloignée de l'évaporateur dans le compartiment à basse température. Le thermostat 10 s'ouvre si la température de conservation devient supérieure à – 15°C, c'est-à-dire que dans ce cas, il laisse travailler la résistance 5 en fonction du réglage effectué au moyen de la commande agissant sur le dispositif de réglage progressif 8. A partir de sa position ouverte, le thermostat 10 ne se referme que si la température descend au-dessous de – 18°C. Si la température dans la zone de conservation du compartiment à basse température est correcte, c'est-à-dire inférieure à – 18°C, le thermostat 10 se ferme et neutralise la résistance 5. A partir de ce moment, la résistance 10 sera neutralisée jusqu'à ce que la température remonte au-delà de – 15°C. A noter que l'introduction d'une quantité quelconque de produits à congeler dans le compartiment à basse température fera remonter rapidement la température au-delà de – 15°C et que, dès lors, le cycle de congélation sera entamé du fait que la résistance chauffante 5 sera à nouveau en service.

## Revendications

1. Réfrigérateur-congélateur comportant un circuit frigorifique à deux évaporateurs alimentés par un motocompresseur (1) commandé par un thermostat (2), ledit réfrigérateur-congélateur ayant deux compartiments dont l'un à basse température assure, au moyen du premier évaporateur, la congélation des produits et la conservation des produits congelés à une température égale ou inférieure à environ –18°C, tandis que l'autre compartiment assure, au moyen du deuxième évaporateur et d'un moyen de chauffage à résistance la conservation des denrées fraîches à une température située entre 0°C et 5°C environ, l'élément de détection du thermostat (2) se trouvant dans le compartiment de conservation au frais, caractérisé en ce qu'il comporte un moyen de réglage de la puissance dissipée par le moyen de chauffage à résistance à des valeurs distinctes choisies en fonction du niveau de remplissage en produits congelés et/ou de la masse de produits à congeler dans le compartiment à basse température.

2. Réfrigérateur-congélateur selon la revendication 1, caractérisé en ce que le moyen de chauffage à résistance est constitué par une résistance (5) associée à un potentiomètre.

3. Réfrigérateur-congélateur selon la revendication 1 ou 2, caractérisé en ce qu'il comporte un moyen d'alimentation sélective du moyen de chauffage à résistance qui est constitué par le thermostat (2) commandant le motocompresseur (1).

4. Réfrigérateur-congélateur selon la revendication 2, caractérisé en ce que le potentiomètre (8) est en série avec la résistance (5).

5. Réfrigérateur-congélateur selon la revendication 4, caractérisé en ce que l'ensemble en série de la résistance (5) et du potentiomètre (8) est en parallèle sur un moyen d'alimentation sélective constitué par le thermostat (2) commandant le motocompresseur (1).

6. Réfrigérateur-congélateur selon l'une des revendications 1 à 5, caractérisé en ce que le moyen de réglage de la puissance dissipée par le moyen de chauffage à résistance est commandé par l'intermédiaire d'un organe de réglage dont les positions sont marquées en unités de poids et/ou de volume.

7. Réfrigérateur-congélateur selon l'une des revendications 1 à 5, caractérisé en ce que ledit moyen de réglage de la puissance dissipée par ledit moyen à résistance chauffante est commandé par l'intermédiaire d'un organe de commande dont les positions sont marquées en terme de pleine charge et fractions de charge telles que demi-charge, tiers de charge, etc.

8. Réfrigérateur-congélateur selon l'une des revendications 1 à 7, caractérisé en ce qu'il comporte, monté en en série avec le moyen de réglage de la puissance dissipée par le moyen de chauffage à résistance, un thermostat (9) dont l'élément de détection se trouve dans la zone de congélation du compartiment à basse température, et qui s'ouvre lorsque la température descend au-dessous de – 18°C, environ.

9. Réfrigérateur-congélateur selon l'une des revendications 1 à 8, caractérisé en ce qu'il comporte un thermostat (10) monté en parallèle aux bornes de la résistance (5), dont l'élément de détection se trouve dans la zone de conservation du compartiment à basse température, et qui s'ouvre quand la température monte au-delà de – 15°C, environ, ledit thermostat ne passant de la position ouverte à la position fermée que si la température descend au-dessous de – 18°C environ.

**Patentansprüche**

1. Kombinierte Kühl-/Gefriereinrichtung, mit einem Kühlkreis mit zwei Verdampfern, die von einem von einem Thermostat (2) gesteuerten Motorkompressor (1) versorgt werden, wobei die kombinierte Kühl-/Gefriereinrichtung zwei Abteile besitzt, von denen eines mit niedriger Temperatur mittels des ersten Verdampfers das Einfrieren von Produkten und die Aufbewahrung der gefrorenen Produkte bei einer Temperatur, die gleich oder geringer als ungefähr – 18°C ist, gewährleistet, während das andere Abteil mittels des zweiten Verdampfers und mittels eines Widerstandsheizmittels die Aufbewahrung von frischen Lebensmitteln bei einer Temperatur im Bereich zwischen ungefähr 0°C und 5°C gewährleistet, wobei sich das Erfassungselement des Thermostaten (2) im Abteil für die Aufbewahrung von frischen Produkten befindet, dadurch gekennzeichnet, daß sie ein Mittel umfaßt zum Einstellen der vom Widerstandsheizmittel in Wärme umgesetzten Leistung auf verschiedene Werte, die in Abhängigkeit vom Füllungsgrad mit gefrorenen Produkten und/oder von der Menge der zu gefrierenden Produkte im Abteil mit niedriger Temperatur gewählt werden.

2. Kombinierte Kühl-/Gefriereinrichtung gemäß Anspruch 1, dadurch gekennzeichnet, daß das Widerstandsheizmittel von einem mit einem Potentiometer verbundenen Widerstand (5) gebildet wird.

3. Kombinierte Kühl-/Gefriereinrichtung gemäß Anspruch 1 oder 2, dadurch gekennzeichnet, daß sie ein Mittel für die wählbare Versorgung des Widerstandsheizmittels umfaßt, das von dem den Motorkompressor (1) steuernden Thermostaten (2) gebildet wird.

4. Kombinierte Kühl-/Gefriereinrichtung gemäß Anspruch 2, dadurch gekennzeichnet, daß das Potentiometer (8) mit dem Widerstand (5) in Reihe geschaltet ist.

5. Kombinierte Kühl-/Gefriereinrichtung gemäß Anspruch 4, dadurch gekennzeichnet, daß die den Widerstand (5) und das Potentiometer (8) umfassende Reihenschaltung mit einem Mittel für die Wahl der Versorgung, das von dem den Motorkompressor (1) steuernden Thermostaten (2) gebildet wird, parallel geschaltet ist.

6. Kombinierte Kühl-/Gefriereinrichtung gemäß einem der Ansprüche 1 bis 5, dadurch gekennzeichnet, daß das Mittel zum Einstellen der vom Widerstandsheizmittel in Wärme umgesetzten Leistung durch ein dazwischengeschaltetes Einstellelement gesteuert wird, dessen Positionen durch Gewichts- und/oder Volumeneinheiten markiert sind.

7. Kombinierte Kühl-/Gefriereinrichtung gemäß einem der Ansprüche 1 bis 5, dadurch gekennzeichnet, daß das Mittel zum Einstellen der vom Widerstandsheizmittel in Wärme umgesetzten Leistung durch ein dazwischengeschaltetes Steuerelement gesteuert wird, dessen Positionen durch Bezeichnungen für volle Beladung und teilweise Beladung wie etwa halbe Beladung, Drittelbeladung usw. markiert sind.

8. Kombinierte Kühl-/Gefriereinrichtung gemäß einem der Ansprüche 1 bis 7, dadurch gekennzeichnet, daß sie in einer Reihenschaltung mit dem Mittel zum Einstellen der vom Widerstandsheizmittel in Wärme umgesetzten Leistung einen Thermostaten (9) aufweist, dessen Erfassungselement sich im Gefrierbereich des Abteils mit niedriger Temperatur befindet und der sich öffnet, wenn die Temperatur unter ungefähr – 18°C abfällt.

9. Kombinierte Kühl-/Gefriereinrichtung gemäß einem der Ansprüche 1 bis 8, dadurch gekennzeichnet, daß sie einen Thermostaten (10) aufweist, der zu den Anschlüssen des Widerstandes (5) parallel geschaltet ist, dessen Erfassungselement sich im Aufbewahrungsbereich des Abteils mit niedriger Temperatur befindet und der sich öffnet, wenn die Temperatur über ungefähr – 15°C ansteigt, wobei der Thermostat nur dann von der geöffneten in die geschlossene Position übergeht, wenn die Temperatur auf weniger als ungefähr – 18°C abfällt.

## Claims

1. A refrigerator and freezer comprising a refrigerant circuit having two evaporators fed by a motorized compressor (1) controlled by a thermostat (2), the said refrigerator and freezer having two compartments of which one at a low temperature ensures, by means of the first evaporator, the freezing of the products and the preserving of the frozen products at a temperature equal to or less than approximately – 18°C, while the other compartment, by means of the second evaporator and by means of a resistance heating, and the preservation of fresh food at a temperature between approximately 0°C and 5°C, the detection element of the thermostat (2) being positioned in the fresh preserving compartment, characterized in that it comprises a means for the regulation of the power dissipated by the resistance heating at distinct values selected as a function of the level of filling with frozen products and/or the mass of the products to be frozen in the low temperature compartment.

2. The refrigerator and freezer as claimed in claim 1, characterized in that the resistance heating means is constituted by a resistor (5) associated with a potentiometer.

3. The refrigerator and freezer as claimed in claim 1 or claim 2, characterized in that it comprises a means of selective feeding for the resistance heating means, which is constituted by the thermostat (2) controlling the motorized compressor (1).

4. The refrigerator and freezer as claimed in claim 2, characterized in that the potentiometer (8) is in series with the resistor (5).

5. The refrigerator and freezer as claimed in claim 4, characterized in that the arrangement in series with the resistor (5) and with the potentiometer (8) is in parallel with a means for selective feeding constituted by the thermostat (2) controlling the motorized compressor (1).

6. The refrigerator and freezer as claimed in any one of the preceding claims 1 through 5, characterized in that the regulating means for the power dissipated by the resistance heating means is controlled by the intermediary of a regulating device whose positions are scaled in units of weight and/or volume.

7. The refrigerator and freezer as claimed in any one of the preceding claims 1 through 5, characterized in that the said means from the regulation of the power dissipated by the said resistance heating means is controlled by the intermediary of a control means whose positions are scaled in terms of full charge and fractions of full charge such as half charge, third charge etc.

8. The refrigerator and freezer as claimed in any one of the preceding claims 1 through 7, characterized in that it comprises, placed in series with the dissipated power regulation means for the resistance heating means, a thermostat (9) whose detection element is positioned in the freezing zone of the low temperature compartment and which opens when the temperature goes below approximately – 18°C.

9. The refrigerator and freezer as claimed in any one of the preceding claims 1 through 9, characterized in that it comprises a thermostat (10) placed in parallel with the terminals of the resistance constituted by the thermostat (2) controlling the motorized compressor (1) whose detector element is placed in the preserving zone of the low temperature compartment and which opens when the temperature goes above approximately – 15°C, the said thermostat only changing from the open position to the closed one if the temperature goes below approximately – 18°C.

FIG. 1

FIG. 2

FIG. 3